# EUROPEAN PATENT SPECIFICATION

(11) **EP 4 596 352 B1**
(45) Date of publication and mention of the grant of the patent: **19.08.2026**
(21) Application number: 23872462.9
(22) Date of filing: 27.09.2023
(51) Int. Cl.: G05D 1/617, G05D 1/249, G05D 1/246, G05D 1/225, B60W 50/00, B60W 60/00, G05D 105/45, G05D 107/70, G05D 109/10

(54) **CONTROL DEVICE**
STEUERVORRICHTUNG
DISPOSITIF DE COMMANDE

(30) Priority: 28.09.2022 JP 2022154586
(43) Date of publication of application: 06.08.2025
(73) Proprietor: TOYOTA JIDOSHA KABUSHIKI KAISHA, Toyota-shi Aichi 471-8571 (JP)
(72) Inventor: YANG Sen, Toyota-shi, Aichi 471-8571 (JP); OKAMOTO Yuki, Toyota-shi, Aichi 471-8571 (JP); NAGASE Hiroaki, Toyota-shi, Aichi 471-8571 (JP); IWAZAKI Noritsugu, Toyota-shi, Aichi 471-8571 (JP); KANOU Takeshi, Toyota-shi, Aichi 471-8571 (JP); IWAHORI Kento, Toyota-shi, Aichi 471-8571 (JP)
(74) Representative: J A Kemp LLP
(86) International application number: PCT/JP2023/035263
(87) International publication number: WO 2024/071240

(56) References cited:
- JP-A- 2011 118 603
- JP-A- 2019 002 764
- JP-A- 2021 015 454
- JP-A- 2022 171 172
- JP-B2- 6 598 122
- US-A1- 2006 058 920
- US-A1- 2019 339 083

## Description

### CROSS REFERENCE TO RELATED APPLICATIONS

### FIELD

The present disclosure relates to a control device that controls a vehicle.

### BACKGROUND ART

Patent Literature 1 discloses a transfer system that controls a vehicle using a dedicated control unit when a vehicle that is able to autonomously drive is transferred from an assembly factory to a finished car yard. The transfer system disclosed in Patent Literature 1 is configured to install (temporarily install) in a vehicle compartment of the vehicle a control unit that is able to communicate with the vehicle, and allow the vehicle to automatically drive based on transfer information received by the control unit from an extra-vehicle server device. According to Patent Literature 1, this control unit is detached by a worker after arrival at the finished car yard, so that it is possible to suppress an increase of a system that is unnecessary for the vehicle.

### CITATION LIST

### PATENT LITERATURE

Patent Literature 1: JP 2020-064388 A is background art, as is US2019/339083A1, JP6598122B2, and US2006/058920A1.

### SUMMARY

There are not only a case where a vehicle that is able to autonomously drive is transferred from the assembly factory to the finished car yard as in Patent Literature 1, but also a case where, when, for example, a vehicle finished in a factory is transferred to an area for inspection, the vehicle is autonomously driven and transferred (self-running conveyance) to an appropriate inspection area instead of transferring the vehicle by a conveyor or the like. On the other hand, at a time of inspection on whether or not a manufactured vehicle is finished, when assembly is checked or rattle is checked, a vehicle rocks. A vehicle that is able to autonomously drive controls a turning angle based on information from an outside or data acquired from a plurality of sensors or the like provided to the vehicle, and runs by autonomous driving. Consequently, by performing above-described inspection while acquiring these items of data, data may be acquired taking rocking of the vehicle caused by inspection into account. When, for example, the turning angle of the vehicle is automatically controlled, a control value of a target turning angle is computed using a lateral acceleration or a yaw rate of the vehicle, and therefore the rocking of the vehicle caused by inspection may influence a computation result. In this case, the vehicle is concerned to deviate greatly from a route through which the vehicle needs to run during autonomous driving. It is not studied for the device according to Patent Literature 1 that safety of running by autonomous driving lowers due to inspection, and there has been a room for improvement.

Hence, there has been desired a technique of suppressing running of a vehicle by autonomous driving from destabilizing.

The present disclosure may be implemented as following aspects.
(1) A first aspect according to the present disclosure provides a control device. This control device includes: an acquisition unit configured to acquire detection data from a sensor, wherein the sensor detects a running state of a vehicle, wherein the vehicle is configured to be able to run by unmanned driving; a determination unit configured to determine whether or not the vehicle is located in a specific area in which the detection data is susceptible to an influence of disturbance; and a running control unit configured to control the running of the vehicle using the detection data, wherein when the determination unit determines that the vehicle is located in the specific area, the running control unit lowers a degree of contribution of the detection data to running control of the vehicle compared to a case where the determination unit determines that the vehicle is located outside the specific area.
   The control device according to this aspect is able to suppress running of the vehicle by unmanned driving from destabilizing.
(2) In the control device according to the above aspect, the determination unit may determine whether or not the vehicle is located in the specific area using location information of the vehicle and a map indicating the specific area.
   The control device according to this aspect is able to easily determine whether or not the vehicle is located in the specific area.
(3) In the control device according to the above aspect, in a case where there is no person in the specific area, even when the determination unit determines that the vehicle is located in the specific area, the running control unit may not lower the degree of contribution of the detection data to the running control of the vehicle compared to the case where the determination unit determines that the vehicle is located outside the specific area.

The control device according to this aspect is able to suppress a decrease in running performance of the vehicle caused by lowering the degree of contribution of the detection data when there is no person in a predetermined area.
(4) In the control device according to the above aspect, when the vehicle is located in the specific area and there is a slope on a running route of the vehicle, the running control unit may control the running of the vehicle according to a gradient of the slope.

The control device according to this aspect is able to suppress a decrease in the running performance of the vehicle when the vehicle runs on the slope.

(5) In the control device according to the above aspect, when the determination unit determines that the vehicle is located in the specific area, the running control unit may control the running of the vehicle without using parameters included in the detection data and associated with an acceleration of the vehicle and a yaw rate of the vehicle.

The control device according to this aspect is able to suppress running of the vehicle by unmanned driving from destabilizing when the vehicle runs in a specific area in which the vehicle readily rocks.

(6) In the control device according to the above aspect, when the running control unit determines that the detection data is influenced by the disturbance outside the specific area, the running control unit may cause a broadcasting device to perform broadcasting.

The control device according to this aspect is able to broadcast that running of the vehicle by unmanned driving may destabilize outside the specific area.

The present disclosure is also able to be implemented by various aspects other than the control device. The present disclosure may be implemented as, for example, aspects such as a system, a method, a computer program, and a recording medium having the computer program recorded thereon.

### BRIEF DESCRIPTION OF DRAWINGS

Fig. 1 is an explanatory view illustrating a configuration of a system according to a first embodiment;
Fig. 2 is an explanatory view illustrating a configuration of a vehicle according to the first embodiment;
Fig. 3 is an explanatory view illustrating a configuration of a server according to the first embodiment;
Fig. 4 is a flowchart illustrating a processing procedure of vehicle control according to the first embodiment;
Fig. 5 is a flowchart illustrating an example of control executed by a control device;
Fig. 6 is a flowchart illustrating another example of control executed by the control device;
Fig. 7 is a flowchart illustrating still another example of control executed by the control device;
Fig. 8 is an explanatory view illustrating a configuration of the vehicle according to a second embodiment;
Fig. 9 is a flowchart illustrating a processing procedure of vehicle control according to the second embodiment; and
Fig. 10 is an explanatory view illustrating a configuration of the vehicle according to a third embodiment.

### DETAILED DESCRIPTION

### A. First Embodiment:

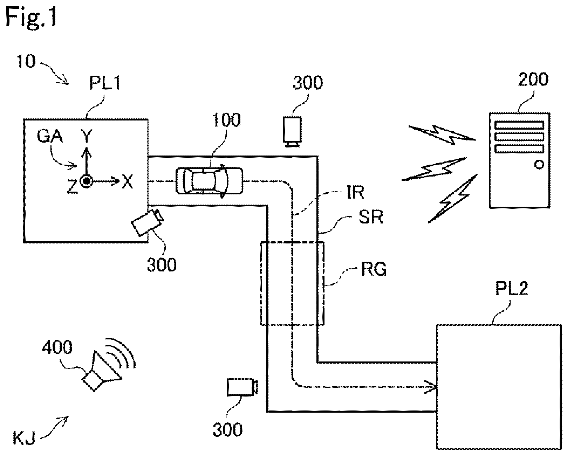

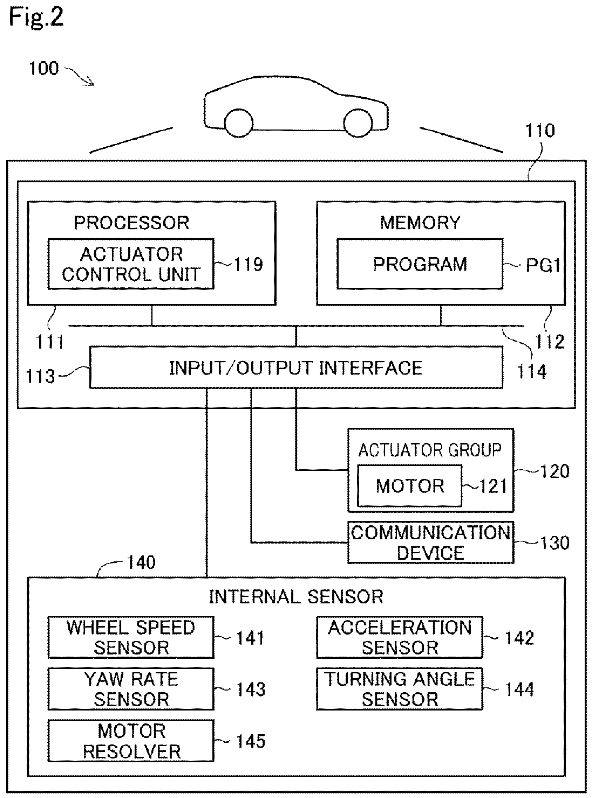

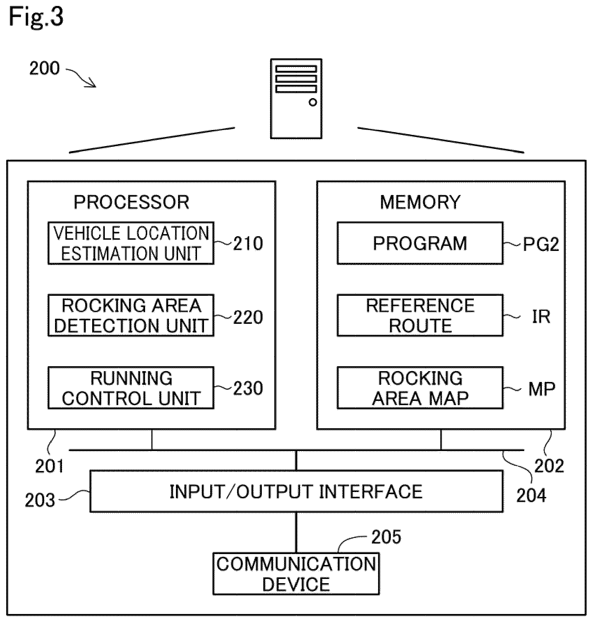

Fig. 1 is an explanatory view illustrating a configuration of a system 10 including a server 200 that is a control device according to the first embodiment. Fig. 2 is an explanatory view illustrating a configuration of a vehicle 100. Fig. 3 is an explanatory view illustrating a configuration of the server 200. As illustrated in Fig. 1, the system 10 includes the vehicle 100 that is able to run by unmanned driving, the server 200, a plurality of extra-vehicle sensors 300, and a broadcasting device 400. In the present embodiment, the vehicle 100 is a Battery Electric Vehicle (BEV). Note that the vehicle 100 is not limited to an electric vehicle as long as the vehicle 100 is able to run by unmanned driving, and may be, for example, a gasoline car, a diesel car, a hybrid car, or a fuel cell car.

In the present disclosure, "unmanned driving" means driving that does not depend on a driving operation of a passenger in the vehicle 100. The "driving operation" means an operation related to at least one of "run", "turn", and "stop" of the vehicle 100. Unmanned driving is implemented by automatic or manual remote control that uses a device located outside the vehicle 100, or autonomous control of the vehicle 100. Passengers that do not perform the driving operation may be in the vehicle 100 that is running by unmanned driving. The passengers that do not perform the driving operation include, for example, a person simply sitting at a driver's seat of the vehicle 100, and a person who is taking a behavior different from the driving operation. The behavior different from the driving operation includes, for example, work of assembling parts to the vehicle 100, inspection of the vehicle 100, and an operation of switches provided to the vehicle 100. In the following description, unmanned driving implemented by automatic remote control that uses a device located outside the vehicle 100, or unmanned driving implemented by autonomous control of the vehicle 100 will be referred to as "autonomous driving". Note that driving performed by a driving operation of a passenger will be referred to as "manned driving" in some cases.

In the present embodiment, the vehicle 100 is configured to be able to run by remote control of the server 200. More specifically, as illustrated in Fig. 2, the vehicle 100 includes an ECU 110 that controls each unit of the vehicle 100, an actuator group 120 that includes at least one actuator that is driven under control of the ECU 110, a communication device 130 for communicating with the server 200 by wireless communication, and an internal sensor group 140 that includes at least one internal sensor. In the present disclosure, the internal sensor means a sensor that is mounted on the vehicle 100 and acquires information of the vehicle 100.

The actuator group 120 includes an actuator of a driving device for accelerating the vehicle 100, an actuator of a steering device for changing a traveling direction of the vehicle 100, and an actuator of a braking device for decelerating the vehicle 100. The driving device includes a battery, a running motor 121 that is driven using electrical power of the battery, and wheels that are rotated by the running motor 121. The actuator of the driving device includes the running motor 121. The running motor 121 is a driving force source that outputs a torque for generating a driving force of the vehicle 100. The running motor 121 includes, for example, a motor (motor/generator) or the like that has a power generation function such as a synchronous motor of a permanent magnet type. Note that, although not illustrated, the vehicle 100 includes various devices such as steering wheels, an accelerator pedal, and a brake pedal that are necessary for manned deriving, a device for lighting, a device for indicating a direction, and the like.

The internal sensor group 140 includes as internal sensors a wheel speed sensor 141 that detects a pulse of a wheel speed of each wheel, an acceleration sensor 142 that detects an acceleration in a lateral direction and a front/rear direction of the vehicle 100, a yaw rate sensor 143 that detects a rate of a change of a yaw angle of the vehicle 100, a turning angle sensor 144 that detects the turning angle of the vehicle 100, and a motor resolver 145 that detects a rotation angle of the running motor 121. These internal sensors are electrically connected to the ECU 110, each actuator, and the like by a CAN, a wire harness, and the like, and is configured to output an electrical signal corresponding to a detection value or a calculation value of acquired data as detection data to the ECU 110.

The ECU 110 is configured as a computer that includes a processor 111, a memory 112, an input/output interface 113, and an internal bus 114. The memory 112 includes a ROM or a RAM. The processor 111, the memory 112, and the input/output interface 113 are bidirectionally communicably connected through the internal bus 114. The input/output interface 113 is connected with the actuator group 120, the communication device 130, and the internal sensor group 140.

The processor 111 functions as an actuator control unit 119 by executing a computer program PG1 stored in advance in the memory 112. The actuator control unit 119 transmits detection data of the internal sensor group 140 to the server 200. The actuator control unit 119 receives a running control signal from the server 200, and controls the actuator group 120 according to the received running control signal. In the present embodiment, the running control signal includes the acceleration and the turning angle of the vehicle 100 as the parameters. The running control signal may include the speed of the vehicle 100 instead of the acceleration of the vehicle 100. The actuator control unit 119 is able to cause the vehicle 100 to run by controlling the actuator group 120 in response to a passenger's driving operation when the passenger is in the vehicle 100. The actuator control unit 119 is able to cause the vehicle 100 to run by controlling the actuator group 120 according to a running control signal received from the server 200 irrespectively of whether or not the passenger is in the vehicle 100.

As illustrated in Fig. 3, the server 200 is configured as a computer that includes a processor 201, a memory 202, an input/output interface 203, and an internal bus 204. The memory 202 includes a ROM or a RAM. The processor 201, the memory 202, and the input/output interface 203 are bidirectionally communicably connected through the internal bus 204. The input/output interface 203 is connected with a communication device 205 that communicates with the vehicle 100 by wireless communication. The input/output interface 203 acquires detection data from a sensor that detects a running state of the vehicle 100 via the communication device 205. Hence, the input/output interface 203 will be also referred to as an acquisition unit. The sensor that detects the running state of the vehicle 100 includes the internal sensors 141 to 145 and the extra-vehicle sensors 300. In the present embodiment, the communication device 205 is able to communicate with the extra-vehicle sensors 300 and the broadcasting device 400 by wired communication or wireless communication. Note that, in the present embodiment, the server 200 will be also referred to as a control device. In the present embodiment, the server 200 may be also referred to as a remote control device.

The processor 201 functions as a vehicle location estimation unit 210, a detection unit 220, and a running control unit 230 by executing a computer program PG2 stored in advance in the memory 202. The vehicle location estimation unit 210 acquires detection data output from the extra-vehicle sensors 300, and estimates a current location and direction of the vehicle 100 using the acquired detection data. The vehicle location estimation unit 210 may acquire detection data of the acceleration, the yaw rate, and the like output from the internal sensor group 140 in addition to the detection data output from the extra-vehicle sensors 300, and estimate the current location and direction of the vehicle 100 using the acquired detection data.

The detection unit 220 detects that the vehicle 100 is located in a specific area in which the detection data of the sensor that detects the running state of the vehicle 100 is susceptible to an influence of disturbance. In other words, the detection unit 220 determines whether or not the vehicle 100 is located in the specific area in which the detection data of the sensor that detects the running state of the vehicle 100 is susceptible to the influence of disturbance. Hence, the detection unit 220 will be also referred to as a determination unit. In the present disclosure, the disturbance means a factor that destabilizes running control of the vehicle 100. The disturbance includes, for example, rocking of the vehicle 100, wheel spin of the wheels, hiding of the vehicle 100 from the extra-vehicle sensors 300 caused when people come and go between the extra-vehicle sensors 300 and the vehicle 100, and the like. The sensor that detects the running state of the vehicle 100 includes the respective sensors 141 to 145 of the internal sensor group 140 and the extra-vehicle sensors 300. The running control unit 230 feeds back, to running control of the vehicle 100, detection data of at least one of the sensors 141 to 145 and 300 that detect the running state of the vehicle 100. Hence, when the detection data fed back to the running control of the vehicle 100 is influenced by the disturbance, the running control of the vehicle 100 destabilizes.

When, for example, the vehicle 100 rocks, the detection data of the acceleration sensor 142 and the yaw rate sensor 143 mounted on the vehicle 100 is influenced by the rocking, and control of the acceleration and the turning angle of the vehicle 100 may destabilize. When the vehicle 100 runs on an uneven road surface and thereby rocks, not only the detection data of the acceleration sensor 142 and the yaw rate sensor 143 is influenced by the rocking, but also the detection data of the turning angle sensor 144 is influenced by the rocking because a direction of a steering wheel is shifted to the left and the right. When the detection data of the turning angle sensor 144 is influenced by the rocking, control of the turning angle of the vehicle 100 may destabilize. When wheel spin of the wheels occurs, the detection data of the wheel speed sensor 141 and the motor resolver 145 is influenced by the wheel spin, and control of the speed of the vehicle 100 may destabilize. When people come and go between the extra-vehicle sensors 300 and the vehicle 100 and therefore the vehicle 100 is hidden from the extra-vehicle sensors 300, accuracy of estimating the location and the direction of the vehicle 100 using the extra-vehicle sensors 300 lowers, and running control of the vehicle 100 may destabilize.

In the present embodiment, the detection unit 220 determines whether or not the vehicle 100 is located in a rocking area RG that is a specific area in which the detection data used for running control of the vehicle 100 is susceptible to the influence of rocking. In the following description, the specific area in which the detection data of the sensor that detects the running state of the vehicle 100 is susceptible to an influence of rocking will be referred to as the rocking area RG, and the detection unit 220 will be referred to as the rocking area detection unit 220. As described above, there is a case where inspection that causes rocking of the vehicle 100 is performed to check assembly or rattle of the vehicle 100. Hence, the rocking area detection unit 220 determines whether or not the vehicle 100 is located in the rocking area RG that is the specific area inspected in such a way. In the present embodiment, a rocking area map MP indicating the range of the rocking area RG is stored in advance in the memory 202. The rocking area detection unit 220 determines whether or not the vehicle 100 is located in the rocking area RG using a current location of the vehicle 100 estimated by the vehicle location estimation unit 210, and the rocking area map MP.

The running control unit 230 controls running of the vehicle 100 using the detection data of at least one of the sensors 141 to 145 and 300 that detect the running state of the vehicle 100. When the rocking area detection unit 220 determines that the vehicle 100 is located in the rocking area RG, the running control unit 230 lowers the degree of contribution of detection data to running control of the vehicle 100 lowers compared to a case where the rocking area detection unit 220 determines that the vehicle 100 is located outside the rocking area RG. In the present disclosure, lowering the degree of contribution of detection data to running control of the vehicle 100 includes decreasing a weight coefficient of detection data in a calculation formula for calculating a control command value, setting the weight coefficient of the detection data to zero, or changing the calculation formula for calculating the control command value to another calculation formula that does not include the detection data in parameters when, for example, the control command value related to the running control is calculated from a plurality of parameters including the detection data. Changing the calculation formula for calculating the control command value to the another calculation formula that does not include the detection data in the parameters includes fixing the control command value to a constant value.

In the present embodiment, the running control unit 230 is configured to compute the control command value for causing the vehicle 100 to run by autonomous driving, and switch a running mode of autonomous driving control according to an area in which the vehicle 100 runs. The running control unit 230 generates the running control signal including the control command value, and transmits the generated running control signal to the vehicle 100. The vehicle 100 includes as running modes for performing autonomous driving a normal area running mode that is set when the vehicle 100 runs between, for example, a public road and a factory KJ, and executes so-called normal autonomous driving running, and a rocking area running mode that is set when the vehicle 100 runs in the above-described rocking area RG. The running control unit 230 is configured to, when the vehicle 100 receives from the rocking area detection unit 220 information indicating that the vehicle 100 runs in the rocking area RG, switch the running mode and set the rocking area running mode. Note that the rocking area running mode will be also referred to as a specific area running mode.

The rocking area running mode is set when, for example, the vehicle 100 runs in the rocking area RG in which the vehicle 100 is likely to rock due to inspection or the like as described above while the vehicle 100 is running in the factory KJ by autonomous driving. For example, multiple checkups and inspections are conducted at a time of shipping of the vehicle 100, and therefore the vehicle 100 may rock depending on a checkup or inspection type. According to autonomous driving running, the vehicle 100 runs based on data detected by the internal sensor group 140, the extra-vehicle sensors 300, or the like, and therefore when the vehicle 100 rocks, the vehicle 100 runs by autonomous driving based on changes in the acceleration and the yaw rate of the vehicle 100 that have occurred due to this rocking and, as a result, it is concerned that the vehicle 100 deviates from a predetermined route and contacts other vehicles or workers. To prevent such a situation, the rocking area running mode is a running mode that is set when the vehicle 100 intentionally runs by autonomous driving in an area in which the vehicle 100 is rocked.

Hence, the rocking area running mode is a running mode that is configured to suppress an influence of rocking on autonomous driving running when the vehicle 100 rocks due to inspection or the like. That is, in the rocking area running mode, autonomous driving control is performed based on predetermined parameters that are less relatively susceptible to an influence of rocking due to inspection or the like, and include a parameter corresponding to a wheel speed, a parameter that corresponds to a rotational speed of the running motor 121 that is a driving force source, and a parameter corresponding to a turning angle of the vehicle 100.

According to, for example, control of the vehicle 100 in the front/rear direction, a vehicle speed and the acceleration of the vehicle 100 are calculated from a pulse of the wheel speed that is less susceptible to the influence of the rocking, the rotational speed of the running motor 121 based on the motor resolver 145, and the like to perform feedback control, and perform autonomous driving control based on information from the extra-vehicle sensors 300. Furthermore, according to control of the vehicle 100 in the left/right direction (lateral direction), feedback control based on the turning angle of the vehicle 100, the information from the extra-vehicle sensors 300, and the vehicle speed calculated as described above is performed to perform autonomous driving control. Alternatively, a dead zone region of sensitivity characteristics of a sensor that is less susceptible to an influence of rocking of the vehicle 100 is narrowed compared to that of the normal area running mode, or the dead zone region is not set to perform autonomous driving control. The rocking area running mode may be executed by controlling at least one control of these types of control.

On the other hand, the rocking area running mode is configured to stop referring to the parameter corresponding to the acceleration of the vehicle 100 and the parameter corresponding to the yaw rate of the vehicle 100 among a plurality of parameters that are referred to for autonomous driving. These parameters are parameters that are relatively susceptible to the influence of rocking when the vehicle 100 rocks due to inspection. That is, the rocking area running mode is a running mode that controls autonomous driving running based on a value of a sensor or the like that is less relatively susceptible to the influence of rocking of the vehicle 100 due to inspection without referring to a value of a sensor or the like that is relatively susceptible to the influence. Accordingly, while the normal area running mode for performing autonomous driving running in an area except the rocking area RG is able to perform robust running control against, for example, a road surface having an inclination, the rocking area running mode is configured to be able to perform robust running control against rocking of the vehicle 100 due to inspection or the like.

As illustrated in Fig. 1, the extra-vehicle sensors 300 are located outside the vehicle 100. The extra-vehicle sensors 300 are used to detect the location and the direction of the vehicle 100. In the present embodiment, the extra-vehicle sensors 300 are cameras installed in the factory KJ. The extra-vehicle sensor 300 includes an unillustrated communication device, and is able to communicate with the server 200 by wired communication or wireless communication. Note that the extra-vehicle sensors 300 are not limited to the cameras, and may be, for example, LiDARs.

The broadcasting device 400 is a device for broadcasting that abnormality has occurred in the factory KJ to a manager of the system 10 and workers in the factory KJ. In the following description, the manager of the system 10 and the workers of the factory KJ will be referred to a manager and the like. Examples of the broadcasting device 400 include a warning buzzer that is provided to the factory KJ, a warning lamp that is provided to the factory KJ, and a display that is provided to the factory KJ. The broadcasting device 400 may be a tablet terminal that is carried by the manager and the like. The broadcasting device 400 includes an unillustrated communication device, and is able to communicate with the server 200 by wired communication or wireless communication.

In the present embodiment, the factory KJ includes a first place PL1 and a second place PL2. The first place PL1 and the second place PL2 are connected by a track SR on which the vehicles 100 are able to run. In the factory KJ, a plurality of the extra-vehicle sensors 300 are installed along the track SR. The first place PL1 is a place at which the vehicles 100 are assembled. The vehicle 100 assembled at the first place PL1 is able to be run by unmanned driving. The vehicle 100 is moved by unmanned driving from the first place PL1 to the second place PL2 through the track SR. The track SR is provided with the rocking area RG, and the vehicle 100 is inspected in the rocking area RG. The second place PL2 is a place at which the vehicles 100 having passed inspection are stored. The vehicle 100 having passed the inspection is then shipped from the factory KJ. An arbitrary location in the factory KJ in which the vehicle 100 is able to run is represented by X, Y, and Z coordinates of a global coordinate system GA.

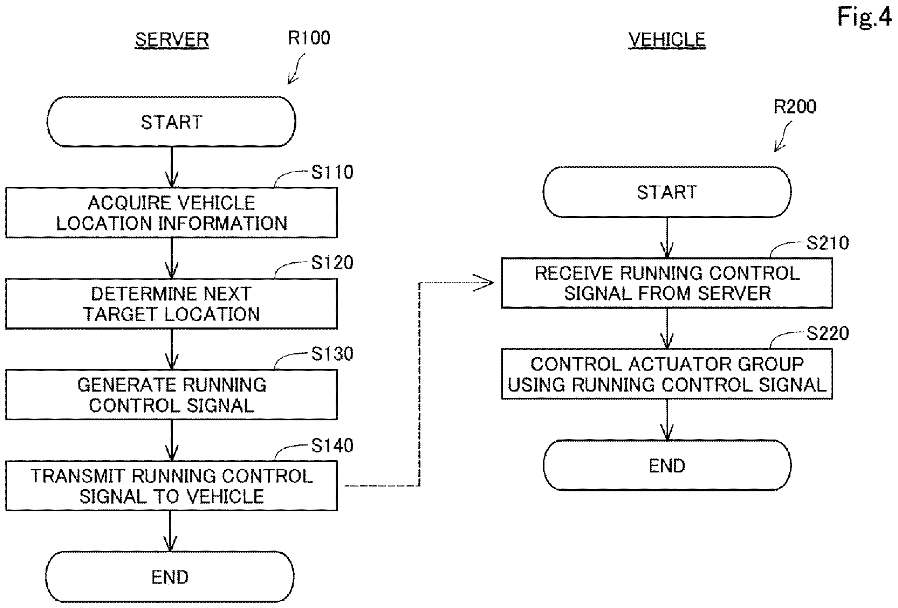

Fig. 4 is a flowchart illustrating a processing procedure of autonomous driving control according to the present embodiment. The processor 201 of the server 200 executes a first routine R100, and the processor 111 of the vehicle 100 executes a second routine R200.

The first routine R100 includes steps S110, S120, S130, and S140. In step S110, the vehicle location estimation unit 210 acquires vehicle location information using detection data output from the extra-vehicle sensors 300. To acquire the vehicle location information, the vehicle location estimation unit 210 is able to use detection data of the acceleration, the yaw rate, or the like acquired from the internal sensor group 140 in addition to the detection data output from the extra-vehicle sensors 300. In the present embodiment, the vehicle location information includes the location and the direction of the vehicle 100 in the global coordinate system GA. In the present embodiment, the extra-vehicle sensors 300 are cameras installed in the factory KJ, and the extra-vehicle sensors 300 output images as detection data. The locations of the individual extra-vehicle sensors 300 are fixed, a relative relationship between the global coordinate system GA and local coordinate systems of the individual extra-vehicle sensors 300 is known, and a coordinate transformation matrix for mutually transforming the coordinates of the global coordinate system GA and coordinates of the local coordinate systems of the individual extra-vehicle sensors 300 is also known. Consequently, the vehicle location estimation unit 210 is able to acquire the location and the direction of the vehicle 100 in the global coordinate system GA using the images acquired from the extra-vehicle sensors 300.

As for a method for acquiring the location of the vehicle 100, the vehicle location estimation unit 210 is able to detect the outer shape of the vehicle 100 from, for example, the images, calculate coordinate systems of the images, that is, coordinates of a positioning point of the vehicle 100 in the local coordinate systems of the extra-vehicle sensors 300, convert the calculated coordinates into coordinates in the global coordinate system GA, and thereby acquire the location of the vehicle 100. The outer shape of the vehicle 100 included in the image can be detected by, for example, inputting the image to a detection model that utilizes artificial intelligence. Examples of the detection model include a trained machine learning model that has been trained to implement one of semantic segmentation and instance segmentation. As this machine learning model, for example, a Convolutional Neural Network (hereinafter, CNN) that has been trained by supervised learning using a learning data set. The learning data set includes, for example, a plurality of training images including the vehicle 100, and a correct label indicating which one of a region indicating the vehicle 100 and a region indicating other than the vehicle 100 each region in each training image is. At a time of training of the CNN, parameters of the CNN are preferably updated to reduce an error between an output result of the detection model and the correct label by backpropagation (error backpropagation method). As for a method for acquiring the direction of the vehicle 100, for example, the vehicle location estimation unit 210 is able to calculate a movement vector of the vehicle 100 from a change of a location of a feature point of the vehicle 100 between frames of an image using an optical flow technique, estimate the direction of the vehicle 100 based on the orientation of the movement vector, and thereby acquire the direction of the vehicle 100.

In step S120, the running control unit 230 determines a target location to which the vehicle 100 needs to travel next. In the present embodiment, the target location is expressed by X, Y, and Z coordinates in the global coordinate system GA. A reference route IR through which the vehicle 100 needs to run is stored in advance in the server 200. The reference route IR is expressed by a node that indicates a departure, a node that indicates a passing point, a node that indicates a destination, and a link that connects the respective nodes. The running control unit 230 determines the target location toward which the vehicle 100 needs to travel next using the location information and the reference route IR of the vehicle 100. The running control unit 230 determines the target location on the reference route IR ahead of a current location of the vehicle 100.

In step S130, the running control unit 230 generates the running control signal for causing the vehicle 100 to run toward the determined target location. In the present embodiment, the running control signal includes the acceleration and the turning angle of the vehicle 100 as parameters. The running control unit 230 calculates a current running speed of the vehicle 100 from a transition of the location of the vehicle 100, and compares the calculated running speed and a predetermined target speed of the vehicle 100. The running control unit 230 determines the acceleration to accelerate the vehicle 100 when the running speed is slower than the target speed, and determines the acceleration to decelerate the vehicle 100 when the running speed is faster than the target speed. The running control unit 230 determines the turning angle such that the vehicle 100 does not deviate from the reference route IR when the vehicle 100 is located on the reference route IR, and determines the turning angle such that the vehicle 100 returns to the reference route IR when the vehicle 100 is not located on the reference route IR, in other words, when the vehicle 100 deviates from the reference route IR. When determining the acceleration and the turning angle of the vehicle 100, the running control unit 230 is able to use detection data of the acceleration, the speed, the turning angle, or the like acquired from the internal sensor group 140.

In step S140, the running control unit 230 transmits the running control signal to the vehicle 100. The processor 201 repeats the first routine R100 including acquisition of the location information of the vehicle 100, determination of the target location, generation of the running control signal, and transmission of the running control signal at a predetermined cycle.

The processor 111 of the vehicle 100 executes the second routine R200 while the first routine R100 is being executed. The second routine R200 includes steps S210 and S220. In step S210, the actuator control unit 119 receives the running control signal from the server 200. In step S220, the actuator control unit 119 causes the vehicle 100 to run at the acceleration and the turning angle included in the running control signal by controlling the actuator group 120 using the received running control signal. The processor 111 repeats the second routine R200 including reception of the running control signal and control of the actuator group 120 at a predetermined cycle. The system 10 according to the present embodiment is able to cause the vehicle 100 to run by remote control, so that it is possible to move the vehicle 100 without using a conveyance facility such as a crane or a conveyor.

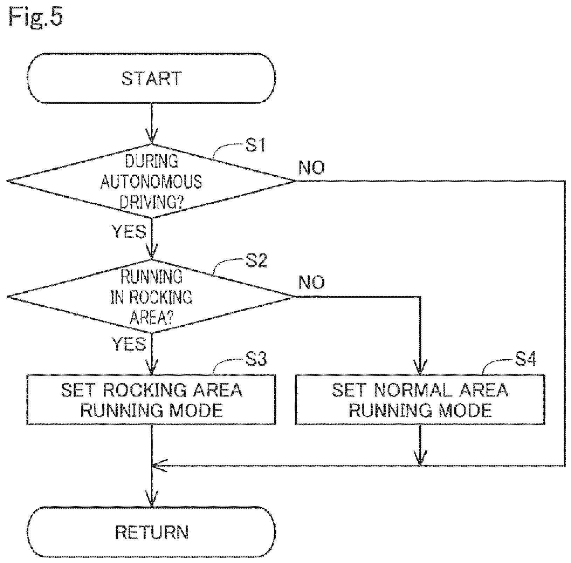

Fig. 5 is a flowchart illustrating a processing procedure of selecting the running mode. This processing is repeatedly executed by the processor 201 of the server 200. In step S1, it is determined that the vehicle 100 is performing autonomous driving control. In a case where the autonomous driving control is not performed, and therefore negative determination is made in step S1, this flowchart is finished once without executing subsequent control.

On the contrary, in a case where the autonomous driving control is performed, and therefore affirmative determination is made in step S1, the flowchart moves to step S2 to determine that an area in which the vehicle 100 is currently running is in the rocking area RG. In step S2, for example, whether or not the vehicle 100 is running in the rocking area RG is determined based on the current location of the vehicle 100 estimated by the vehicle location estimation unit 210, and the rocking area map MP. When the vehicle 100 runs in the rocking area RG, an unintended change of the acceleration or an unintended change of the yaw rate may be caused in the vehicle 100 by rocking due to inspection or the like. In step S2, it is determined that the vehicle 100 is running in an area in which such rocking occurs. In a case where the vehicle 100 is running in the rocking area RG, and therefore affirmative determination is made in step S2, the flowchart moves to step S3 to execute rocking area running control.

In step S3, the vehicle 100 is running in the rocking area RG, and therefore the rocking area running mode is selected as the running mode of the autonomous driving control. The rocking area running mode is a running mode that takes into account that the vehicle 100 rocks due to inspection or the like as described above. In the rocking area running mode, acquisition of data that is susceptible to an influence of rocking of the vehicle 100 and is obtained from the acceleration sensor 142 and the yaw rate sensor 143 is stopped to control the vehicle 100 based on a value calculated based on the pulse of the wheel speed, the rotational speed of the motor, and the like that are less susceptible to the influence of the rocking of the vehicle 100, a dead zone region of the sensor or the like that is less susceptible to the influence of the rocking is narrowed compared to that of normal autonomous driving control to perform autonomous driving running, or the speed, the acceleration, the yaw rate, and the like of the vehicle 100 obtained from external information of the vehicle 100 acquired by the extra-vehicle sensors 300 are used to cause the vehicle 100 to run by autonomous driving. Note that all of these procedures may be performed at a time of setting of the rocking area running mode, or at least one of the procedures may be performed. When the rocking area running mode configured as described is set, this flowchart is finished once.

On the contrary, in a case where the vehicle 100 is not running in the rocking area RG, and therefore negative determination is made in step S2, the flowchart moves to step S4 to perform normal autonomous driving control. In a case where the flowchart moves to step S4, the vehicle 100 is less likely to rock due to inspection or the like, so that it is possible to cause the vehicle 100 to run by autonomous driving running without setting the above-described rocking area running mode. Hence, in step S4, this flowchart is finished once without changing the running mode, that is, in a state where the settings of the normal area running mode are maintained.

As described above, in the embodiment of the present disclosure, when the vehicle 100 runs in the rocking area RG in which the vehicle 100 is likely to rock due to inspection or the like in the factory KJ by autonomous driving, the rocking area running mode is set. The rocking area running mode is a running mode that controls the vehicle 100 based on a predetermined parameter that is less susceptible to the influence of rocking caused due to such inspection or the like, that is, a predetermined parameter having high robustness among a plurality of parameters referred to perform autonomous driving running, and further increases sensitivity of the predetermined parameter having high robustness and controls the vehicle 100, or controls the vehicle 100 using the vehicle speed, the acceleration, the yaw rate, and the like of the vehicle 100 calculated using the detection data of the extra-vehicle sensors 300, and performs autonomous driving. When the rocking area running mode configured as described is set and thereby the vehicle 100 rocks due to inspection or the like, the vehicle 100 is less susceptible to the influence of rocking on autonomous driving running. That is, it is possible to suppress the rocking due to inspection or the like from destabilizing the behavior of the vehicle 100, so that it is possible to perform autonomous driving while suppressing the vehicle 100 from deviating from the reference route IR or suppressing the vehicle 100 from, for example, contacting other vehicles and workers.

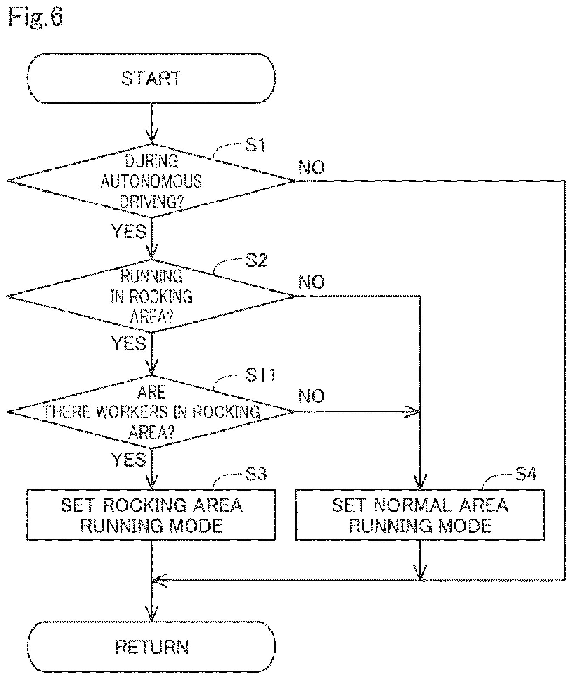

Fig. 6 is a flowchart illustrating a first example of a processing procedure of selecting the running mode according to the other embodiment. The other embodiment illustrated in Fig. 6 is configured such that similar control to steps S1 and S2 illustrated in Fig. 5 is performed and, when affirmative determination is made in step S2 during running in the rocking area RG, the flowchart moves to step S11.

In step S11, whether or not there are workers around the vehicle 100 is determined. More specifically, in step S11, it is determined based on the information acquired from the extra-vehicle sensors 300, operation management information acquired from- an unillustrated process management system, or the like that there are not workers around the vehicle 100 in the rocking area RG. Alternatively, taking autonomous driving performance of the vehicle 100 into account, it may be determined that there are not workers within a predetermined range from the vehicle 100. In a case where there are workers around the vehicle 100, and therefore affirmative determination is made in step S11, the flowchart moves to step S3 to set the rocking area running mode as the running mode.

On the contrary, in a case where there are not the workers around the vehicle 100, and therefore negative determination is made in step S11, the flowchart moves to step S4 to set the normal area running mode as the running mode. That is, when it is confirmed that there are not the workers in the surroundings, the workers are less likely to contact the vehicle 100 during autonomous driving. Consequently, in such a case, it is possible to cause the vehicle 100 to run by autonomous driving in the normal area running mode in the rocking area. In the rocking area running mode, the parameters to be referred to are changed as described above, and therefore, while it is possible to reduce a probability that the vehicle 100 contacts workers, it is concerned that, when, for example, the vehicle 100 runs on a road surface or the like having an inclination, control performance of autonomous driving lowers. By contrast with this, in the normal area running mode, it is possible to cause the vehicle 100 to stably run on such a slope, so that it is possible to suppress a decrease in control performance of autonomous driving control even in the rocking area RG.

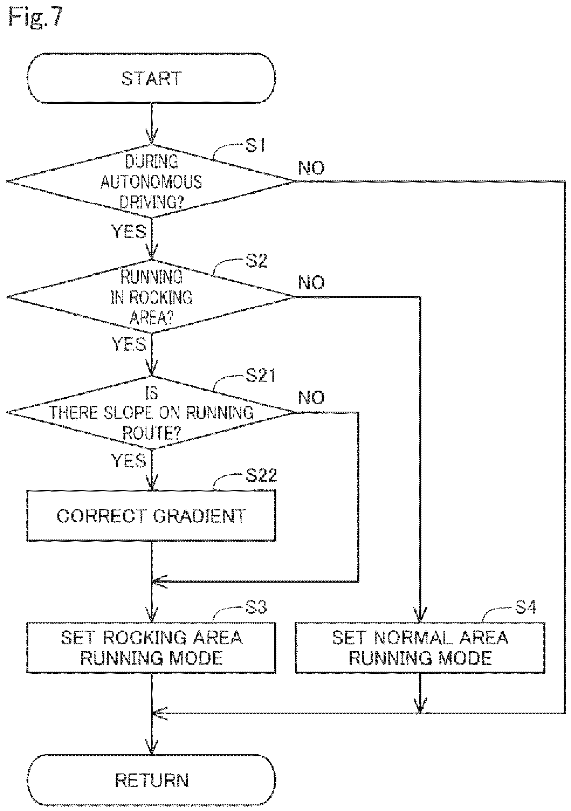

Fig. 7 is a flowchart illustrating a second example of a processing procedure of selecting the running mode according to the other embodiment. In the other embodiment illustrated in Fig. 7, similar control to steps S1 and S2 illustrated in Fig. 5 is performed. In a case where the vehicle 100 is running in the rocking area RG, and therefore affirmative determination is made in step S2, the flowchart is configured to move to step S21 to determine that there is an inclination on a road surface in the rocking area RG. Note that, in a case where the vehicle 100 is not running in the rocking area RG, and therefore negative determination is made in step S2, the flowchart moves to step S4 to set the normal area running mode and finish this flowchart once.

In step S21, when, for example, information on an area in which the vehicle 100 is running is acquired in step S2, it is determined that there is the slope on the reference route IR that is a running route through which the vehicle 100 needs to run in the rocking area RG. As described above, in the rocking area running mode, when parameters to be referred to are changed, autonomous driving performance in a case where the vehicle 100 runs on a slope is concerned to lower compared to the normal area running mode. Hence, in step S21, it is determined that the information related to such a slope has been sent from the server 200. In a case where there is not a slope on the reference route IR of the vehicle 100 in the rocking area RG, and therefore negative determination is made in step S21, the flowchart moves to step S3 to set the rocking area running mode.

On the contrary, in a case where there is a slope on the reference route IR of the vehicle 100 in the rocking area RG, and therefore affirmative determination is made in step S21, the flowchart moves to step S22 to correct a gradient. In step S22, parameters that have relatively great influences on running on the slope among a plurality of parameters used in the rocking area running mode are corrected taking the gradient of the slope such as gradient resistance into account. In a case of, for example, an upward slope, a control value is corrected to increase a driving torque output from the running motor 121, and in a case of a downward slope, a control value is corrected to increase a braking force generated by each wheel or a distribution of a torque between front wheels and rear wheels is corrected.

When gradient correction in step S22 is finished, the flowchart moves to step S3 to set the rocking area running mode. In step S3, the vehicle 100 is caused to run by autonomous driving in the rocking area running mode matching the parameters for which the gradient correction has been performed. When the rocking area running mode is set, this flowchart is finished once. According to such a configuration, when there is a slope in the rocking area RG, autonomous driving in the rocking area running mode is executed based on the parameters for which gradient correction has been performed. Consequently, even when the rocking area running mode is set, it is possible to suppress a decrease in running performance of autonomous driving of the vehicle 100 caused by changing parameters to be referred to.

According to the above-described present embodiment, it is possible to suppress running of the vehicle 100 by autonomous driving from destabilizing. Although the embodiment of the present disclosure has been described above, the present disclosure is not limited to the above-described example, and may be changed as appropriate as long as the object of the present disclosure is achieved. By, for example, installing a mark such as a signboard for indicating the rocking area RG, and detecting this mark by the extra-vehicle sensors 300, it may be determined that the vehicle 100 is running in the rocking area RG. According to such a configuration, even when the above-described rocking area map MP is not used, it is possible to estimate whether or not the vehicle 100 is running in the rocking area RG. Furthermore, the rocking area running mode may include limiting the vehicle speed and causing the vehicle 100 to run by autonomous driving.

During the processing illustrated in Figs. 5 to 7, when it is determined that the vehicle 100 is located outside the rocking area RG and detection data used for running control of the vehicle 100 is influenced by disturbance, the running control unit 230 may cause the broadcasting device 400 to broadcast to the manager and the like a probability that the running state of the vehicle 100 has destabilized. When, for example, a measurement value included in the detection data deviates from a predetermined range or when a measurement value included in the detection data wildly fluctuates up and down, the running control unit 230 determines that the detection data used for the running control of the vehicle 100 is influenced by disturbance. In this case, it is possible to cause the manager and the like to recognize early the probability that the running state of the vehicle 100 has destabilized. Consequently, when the running state of the vehicle 100 destabilizes, it is possible to take an appropriate measure early.

### B. Second Embodiment:

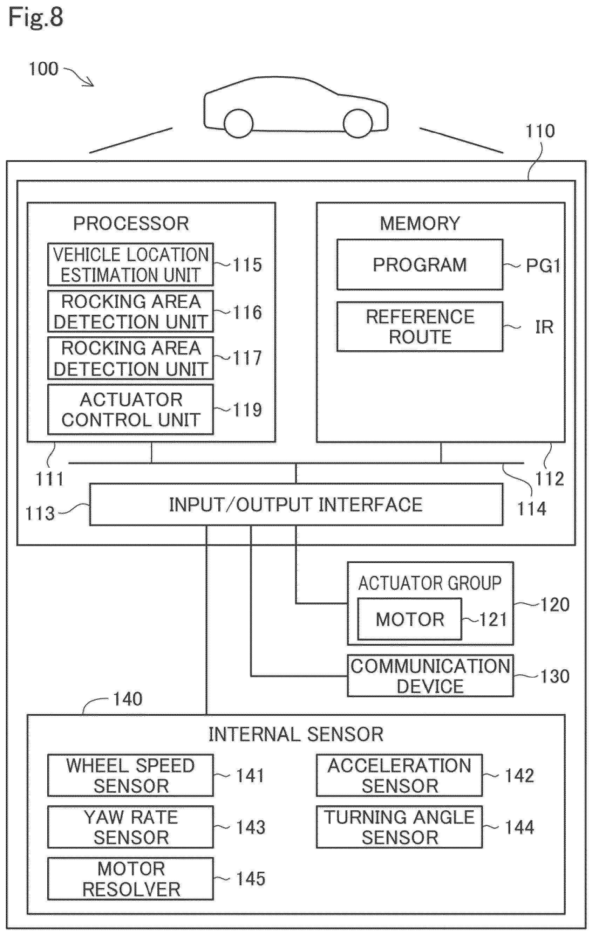

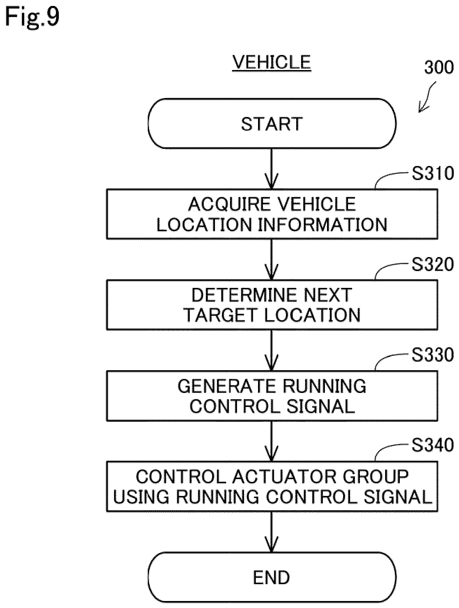

Fig. 8 is an explanatory view illustrating a configuration of the vehicle 100 including the ECU 110 that is the control device according to the second embodiment. Fig. 9 is a flowchart illustrating a processing procedure of autonomous driving control according to the present embodiment. The second embodiment differs from the first embodiment in that the vehicle 100 does not run by being remotely controlled by the server 200, but the vehicle 100 runs by autonomous control. The other components are the same as those in the first embodiment unless otherwise specified in particular. Note that, in the present embodiment, the ECU 110 will be also referred to as a control device.

As illustrated in Fig. 8, in the present embodiment, the communication device 130 of the vehicle 100 is able to communicate with the extra-vehicle sensors 300 and the broadcasting device 400 by wireless communication. In the present embodiment, the processor 111 of the vehicle 100 functions as a vehicle location estimation unit 115, a detection unit 116, a running control unit 117, and the actuator control unit 119 by executing the computer program PG1 stored in advance in the memory 112. Similarly to the vehicle location estimation unit 210 illustrated in Fig. 3, the vehicle location estimation unit 115 acquires vehicle location information using detection data of the extra-vehicle sensors 300 and detection data of the internal sensor group 140. Similarly to the detection unit 220 illustrated in Fig. 3, the detection unit 116 detects that the vehicle 100 is located in a specific area in which the detection data of the sensor that detects the running state of the vehicle 100 is susceptible to an influence of disturbance. In the present embodiment, the detection unit 116 acquires the rocking area map MP from the server 200, and detects that the vehicle 100 is located in the rocking area RG using the vehicle location information acquired by the vehicle location estimation unit 115, and the rocking area map MP. Hence, in the following description, the detection unit 116 will be referred to as the rocking area detection unit 116. Similarly to the running control unit 230 illustrated in Fig. 3, the running control unit 117 switches a running mode of autonomous driving control according to an area in which the vehicle 100 runs. Similarly to the running control unit 230 illustrated in Fig. 3, the running control unit 117 generates a running control signal according to the running mode. The actuator control unit 119 acquires the running control signal generated by the running control unit 117, and controls the actuator group 120 according to the acquired running control signal. Note that, in the present embodiment, the server 200 does not include the vehicle location estimation unit 210, the detection unit 220, and the running control unit 230 illustrated in Fig. 3. In a case where the rocking area map MP is stored in advance in the memory 112 of the ECU 110, the system 10 may not include the server 200. The input/output interface 113 will be also referred to as an acquisition unit, and the detection unit 116 will be also referred to as a determination unit.

As illustrated in Fig. 9, in the present embodiment, the processor 111 of the vehicle 100 executes a third routine R300 during autonomous driving control. The third routine R300 includes steps S310, S320, S330, and S340. In step S310, the vehicle location estimation unit 115 acquires location information of the vehicle 100 using the detection data output from the extra-vehicle sensors 300. To acquire the location information of the vehicle 100, the vehicle location estimation unit 115 may use the detection data output from the internal sensor group 140. In step S320, the running control unit 117 determines a target location to which the vehicle 100 needs to travel next. In the present embodiment, the reference route IR is stored in advance in the memory 112. In step S330, the running control unit 117 generates the running control signal for causing the vehicle 100 to run toward the determined target location. To generate the running control signal, the running control unit 117 may use the detection data output from the internal sensor group 140. In step S340, the actuator control unit 119 causes the vehicle 100 to run at the acceleration and the turning angle indicated by the running control signal by controlling the actuator group 120 using the running control signal generated by the running control unit 117. The processor 111 repeats the third routine R300 including acquisition of the location information of the vehicle 100, determination of the target location, generation of the running control signal, and control of the actuator group 120 at a predetermined cycle.

According to the above-described present embodiment, similarly to the first embodiment, it is possible to suppress running of the vehicle 100 by autonomous driving from destabilizing. According to the present embodiment in particular, it is possible to cause the vehicle 100 to run by autonomous control of the vehicle 100 without remotely controlling the vehicle 100 from the outside.

### C. Third Embodiment:

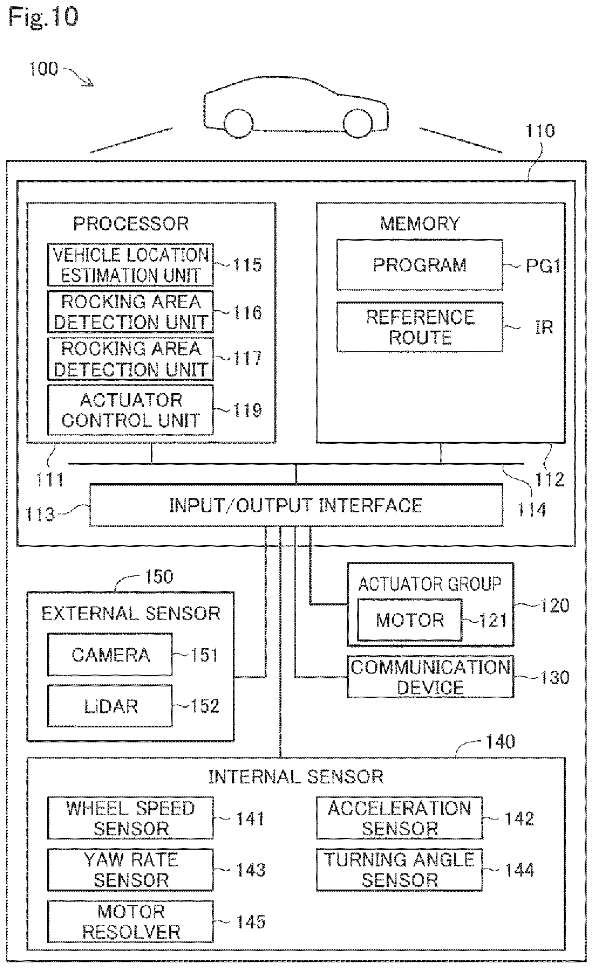

Fig. 10 is an explanatory view illustrating a configuration of the vehicle 100 including the ECU 110 that is the control device according to the third embodiment. The third embodiment differs from the second embodiment in that the vehicle 100 includes an external sensor group 150. The other components are the same as those in the second embodiment unless otherwise specified in particular. Note that, in the present embodiment, the ECU 110 will be also referred to as the control device.

The external sensor group 150 includes at least one external sensor. In the present disclosure, the external sensor means a sensor that is mounted on the vehicle 100 and acquires information of an external environment of the vehicle 100. In the present embodiment, the external sensor group 150 includes a camera 151 and a LiDAR 152 as external sensors. The external sensor group 150 is connected to the input/output interface 113 of the ECU 110.

In the present embodiment, the vehicle location estimation unit 115 acquires vehicle location information using detection data of the external sensor group 150 and detection data of the internal sensor group 140. The rocking area detection unit 116 acquires the rocking area map MP from the server 200, and detects that the vehicle 100 is located in the rocking area RG using the vehicle location information acquired by the vehicle location estimation unit 115, and the rocking area map MP. The running control unit 117 switches the running mode of autonomous driving control according to an area in which the vehicle 100 runs. The running control unit 117 generates a running control signal according to the running mode. The actuator control unit 119 acquires the running control signal generated by the running control unit 117, and controls the actuator group 120 according to the acquired running control signal. In the present embodiment, the sensor that detects the running state of the vehicle 100 includes the respective sensors 141 to 145 of the internal sensor group 140 and the respective sensors 151 and 152 of the external sensor group 150. The running control unit 230 feeds back, to running control of the vehicle 100, detection data of at least one of the sensors 141 to 145 and 151 and 152 that detect the running state of the vehicle 100. Note that the input/output interface 113 will be also referred to as an acquisition unit, and the rocking area detection unit 116 will be also referred to as a determination unit.

According to the above-described present embodiment, similarly to the second embodiment, it is possible to suppress running of the vehicle 100 by autonomous driving from destabilizing. In the present embodiment in particular, even in a case where the extra-vehicle sensors 300 are not installed in the factory KJ, the vehicle location estimation unit 210 is able to acquire the vehicle location information.

### D. Other Embodiments:

(D1) In each of the above-described embodiments, the rocking area detection units 116 and 220 detect whether or not the vehicle 100 is located in the rocking area RG using the location information of the vehicle 100 and the rocking area map MP. By contrast with this, the rocking area detection units 116 and 220 may determine whether or not the vehicle 100 is located in the rocking area RG without using the rocking area map MP. When, for example, the rocking area RG is an area in which the vehicle 100 rocks due to unevenness of a road surface, an unevenness pattern of the road surface is known, so that it is possible to cause the vehicle 100 to run in the rocking area RG by a test conducted in advance, and grasp what frequency noise is added to detection data of the acceleration sensor 142 mounted on the vehicle 100 that runs in the rocking area RG. By detecting that predetermined frequency noise grasped by the above test has been added to the detection data of the acceleration sensor 142, the rocking area detection units 116 and 220 may determine whether or not the vehicle 100 is located in the rocking area RG. Furthermore, in this case, the running control units 117 and 230 may perform filter processing of canceling noise from the detection data of the acceleration sensor 142 at a time of the rocking area running mode, and then determine a control command value of an acceleration using the detection data of the acceleration sensor 142.

(D2) In each of the above-described embodiments, when the vehicle 100 runs in the rocking area RG, the control devices 110 and 200 that control running of the vehicle 100 set the rocking area running mode. In other words, when the vehicle 100 runs in a specific area, the control devices 110 and 200 set a specific running mode different from the normal running mode. By contrast with this, when the vehicle 100 runs in a specific area other than the rocking area RG, the control devices 110 and 200 may set a specific running mode different from the normal running mode. When, for example, a location and a direction of the vehicle 100 are detected using images captured by the extra-vehicle sensors 300 installed in the factory KJ, there is a case where workers passing between the extra-vehicle sensors 300 and the vehicle 100 hide the vehicle 100, accuracy of detecting the location and the direction of the vehicle 100 lowers, and running of the vehicle 100 destabilizes. Hence, when the vehicle 100 runs in a specific area in which workers frequently come and go, the degree of contribution of the extra-vehicle sensors 300 at a time when the location and the direction of the vehicle 100 are acquired may be lowered compared to a case where the vehicle 100 runs outside the above specific area. Furthermore, when, for example, the location and the direction of the vehicle 100 are detected using images captured by the extra-vehicle sensors 300 installed in the factory KJ, the vehicle 100 in the images becomes difficult to detect due to an influence of sunlight or the like, and running of the vehicle 100 destabilizes. Hence, when the vehicle 100 runs in a specific area that is susceptible to the influence of sunlight or the like on a date on which images are susceptible to the influence of the sunlight or the like, the degree of contribution of the extra-vehicle sensors 300 at a time when the position and the direction of the vehicle 100 are acquired may be lowered compared to a case where the vehicle 100 runs outside the above specific area.

(D3) In the above-described first embodiment, the server 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.

(1) The server 200 may acquire vehicle location information, determine a target location to which the vehicle 100 is to move next, and generate a route from a current location of the vehicle 100 indicated by the acquired vehicle location information to the target location. The server 200 may generate a route to the target location between the current location and a destination or generate a route to the destination. The server 200 may transmit the generated route to the vehicle 100. The vehicle 100 may generate a running control signal in such a manner as to cause the vehicle 100 to run along the route received from the server 200 and control the actuator group 120 using the generated running control signal.

(2) The server 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control the actuator group 120 using the generated running control signal.

(3) In above aspects (1) and (2), the internal sensor group 140 and the external sensor group 150 may be mounted on the vehicle 100, and detection data output from the internal sensor group 140 and the external sensor group 150 may be used for at least one of generation of a route and generation of a running control signal. According to, for example, above aspect (1), the server 200 may acquire the detection data of the internal sensor group 140 and the external sensor group 150, and reflect the detection data of the internal sensor group 140 and the external sensor group 150 in a route at a time of generation of the route. According to above aspect (1), the vehicle 100 may acquire the detection data of the internal sensor group 140 and the external sensor group 150, and reflect the detection data of the internal sensor group 140 and the external sensor group 150 in a running control signal at a time of generation of the running control signal. According to, for example, above aspect (2), the vehicle 100 may acquire the detection data of the internal sensor group 140 and the external sensor group 150, and reflect the detection data of the internal sensor group 140 and the external sensor group 150 in a route at a time of generation of the route. According to above aspect (2), the vehicle 100 may acquire the detection data of the internal sensor group 140 and the external sensor group 150, and reflect the detection data of the internal sensor group 140 and the external sensor group 150 in a running control signal at a time of generation of the running control signal.

(D4) In the above-described first embodiment, the server 200 may acquire a target arrival time for a destination of the vehicle 100 and traffic jam information, and reflect the target arrival time and the traffic jam information in at least one of a route and a running control signal. Furthermore, in the above-described second embodiment and third embodiment, the vehicle 100 may acquire the target arrival time for the destination and the traffic jam information from an outside of the vehicle 100, and reflect the target arrival time and the traffic jam information in at least one of the route and the running control signal.

(D5) In each of the above-described embodiments, all of the functional configurations of the system 10 may be provided to the vehicle 100. That is, processing implemented by the system 10 described in the present disclosure may be implemented by the vehicle 100 alone.

(D6) In the above-described first embodiment, the server 200 automatically generates a running control signal to be transmitted to the vehicle 100. By contrast, the server 200 may generate a running control signal to be transmitted to the vehicle 100 in response to operation by an external operator existing outside the vehicle 100. For example, the external operator may operate an operating device including a display on which a captured image output from the external sensor 300 is displayed, steering, an accelerator pedal, and a brake pedal for operating the vehicle 100 remotely, and a communication device for making communication with the server 200 through wire communication or wireless communication, for example, and the server 200 may generate a running control signal responsive to the operation on the operating device.

(D7) In each of the above-described embodiments, the vehicle 100 only needs be configured to be able to move by unmanned driving, and may adopt, for example, a form of a platform that employs the following configuration. More specifically, the vehicle 100 only needs to include at least the ECU 110 and the actuator group 120 to exhibit three functions of "run", "turn", and "stop" by unmanned driving. When the vehicle 100 acquires information from the outside for unmanned driving, the vehicle 100 only needs to further include the communication device 130. When detection data of the internal sensor group 140 is used for unmanned driving, the vehicle 100 only needs to further include the internal sensor group 140. When detection data of the external sensor group 150 is used for unmanned driving, the vehicle 100 only needs to further include the external sensor group 150. That is, to the vehicle 100 that is able to move by unmanned driving, at least part of interior parts such as seats and a dashboard may not be attached, at least part of exterior parts such as bumpers and fenders may not be attached, and a body shell may not be attached. In this case, before the vehicle 100 is shipped from the factory KJ, the rest of parts such as a body shell may be attached to the vehicle 100, or, after the vehicle 100 is shipped from the factory KJ in a state where the rest of parts such as the body shell is not attached to the vehicle 100, the rest of parts such as the body shell may be attached to the vehicle 100. Each part may be attached from an arbitrary direction such as an upper side, a lower side, a front side, a rear side, a right side, or a left side of the vehicle 100, and may be attached from the same direction, or may be attached from respectively different directions. Note that the location of the form of the platform may be determined similarly to the vehicle 100 in each of the above embodiments.

(D8) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(D9) In each of the above embodiments, the vehicle 100 is not limited to a passenger car, and may be, for example, a track, a bus, a construction vehicle, or the like. The vehicle 100 is not limited to a four-wheeled car, and may be, for example, a two-wheeled car. The vehicle 100 is not limited to a mode for running with wheels, and may adopt a mode for running using an endless track.

(D10) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

### REFERENCE SIGNS LIST

10 ... SYSTEM, 100 ... VEHICLE, 111 ... PROCESSOR, 112 ... MEMORY, 113 ... INPUT/OUTPUT INTERFACE, 114 ... INTERNAL BUS, 115 ... VEHICLE LOCATION ESTIMATION UNIT, 116 ... ROCKING AREA DETECTION UNIT, 117 ... RUNNING CONTROL UNIT, 119: ... ACTUATOR CONTROL UNIT, 120 ... ACTUATOR GROUP, 121 ... RUNNING MOTOR, 130 ... COMMUNICATION DEVICE, 140 ... INTERNAL SENSOR GROUP, 141 ... WHEEL SPEED SENSOR, 142 ... ACCELERATION SENSOR, 143 ... YAW RATE SENSOR, 144 ... TURNING ANGLE SENSOR, 145 ... MOTOR RESOLVER, 150 ... EXTERNAL SENSOR GROUP, 151 ... CAMERA, 152 ... LiDAR, 200 ... SERVER, 201 ... PROCESSOR, 202 ... MEMORY, 203 ... INPUT/OUTPUT INTERFACE, 204 ... INTERNAL BUS, 205 ... COMMUNICATION DEVICE, 210 ... VEHICLE LOCATION ESTIMATION UNIT, 220 ... ROCKING AREA DETECTION UNIT, 230 ... RUNNING CONTROL UNIT, 300 ... EXTRA-VEHICLE SENSOR, 400 ... BROADCASTING DEVICE

## Claims

1. A control device (110, 200) comprising:
an acquisition unit (113, 203) configured to acquire detection data from a sensor (140, 150, 300), wherein the sensor detects a running state of a vehicle (100), wherein the vehicle is configured to be able to run by unmanned driving;
a determination unit (116, 220) configured to determine whether or not the vehicle is located in a specific area (RG) in which the detection data is susceptible to an influence of disturbance; and
a running control unit (117, 230) configured to control the running of the vehicle using the detection data, wherein when the determination unit determines that the vehicle is located in the specific area, the running control unit lowers a degree of contribution of the detection data to running control of the vehicle compared to a case where the determination unit determines that the vehicle is located outside the specific area,
**characterised in that**:
in a case where there is no person in the specific area, even when the determination unit determines that the vehicle is located in the specific area, the running control unit does not lower the degree of contribution of the detection data to the running control of the vehicle compared to the case where the determination unit determines that the vehicle is located outside the specific area.

2. The control device (110, 200) of the vehicle (100) according to claim 1, wherein the determination unit (116, 220) determines whether or not the vehicle is located in the specific area (RG) using location information of the vehicle and a map indicating the specific area.

3. The control device (110, 200) of the vehicle (100) according to claim 1 or 2, wherein, when the vehicle is located in the specific area (RG) and there is a slope on a running route (IR) of the vehicle, the running control unit (117, 230) controls the running of the vehicle according to a gradient of the slope.

4. The control device (110, 200) of the vehicle (100) according to claim 1 or 2, wherein, when the determination unit (116, 220) determines that the vehicle is located in the specific area, the running control unit (117, 230) controls the running of the vehicle without using parameters included in the detection data and associated with an acceleration of the vehicle and a yaw rate of the vehicle.

5. The control device (110, 200) of the vehicle (100) according to claim 1 or 2, wherein, when the running control unit (117, 230) determines that the detection data is influenced by disturbance outside the specific area, the running control unit causes a broadcasting device (400) to perform broadcasting.

## Patentansprüche

1. Steuervorrichtung (110, 200) umfassend:
eine Erfassungseinheit (113, 203), die konfiguriert ist, um Detektionsdaten von einem Sensor (140, 150, 300) zu erfassen, wobei der Sensor einen Fahrzustand eines Fahrzeugs (100) erfasst, wobei das Fahrzeug so konfiguriert ist, dass es in der Lage ist, unbemannt zu fahren;
eine Bestimmungseinheit (116, 220), die konfiguriert ist, um zu bestimmen, ob sich das Fahrzeug in einem spezifischen Bereich (RG) befindet oder nicht, in welchem die Erfassungsdaten für einen Einfluss oder eine Störung anfällig sind; und
eine Fahrsteuereinheit (117, 230), die konfiguriert ist, um das Fahren des Fahrzeugs unter Verwendung der Detektionsdaten zu steuern, wobei, wenn die Bestimmungseinheit bestimmt, dass sich das Fahrzeug in dem spezifischen Bereich befindet, die Fahrsteuereinheit einen Grad des Beitrags der Detektionsdaten zu der Fahrsteuerung des Fahrzeugs im Vergleich zu einem Fall verringert, wo die Bestimmungseinheit bestimmt, dass sich das Fahrzeug außerhalb des spezifischen Bereichs befindet,
**dadurch gekennzeichnet, dass**:
in einem Fall, wo sich keine Person in dem spezifischen Bereich befindet, selbst wenn die Bestimmungseinheit bestimmt, dass sich das Fahrzeug in dem spezifischen Bereich befindet, die Fahrsteuereinheit den Grad des Beitrags der Detektionsdaten zu der Fahrsteuerung des Fahrzeugs im Vergleich zu dem Fall, wo die Bestimmungseinheit bestimmt, dass sich das Fahrzeug außerhalb des spezifischen Bereichs befindet, nicht verringert.

2. Steuervorrichtung (110, 200) des Fahrzeugs (100) nach Anspruch 1, wobei die Bestimmungseinheit (116, 220) unter Verwendung von Standortinformationen des Fahrzeugs und einer Karte, die den spezifischen Bereich anzeigt, bestimmt, ob sich das Fahrzeug in dem spezifischen Bereich (RG) befindet oder nicht.

3. Steuervorrichtung (110, 200) des Fahrzeugs (100) nach Anspruch 1 oder 2, wobei, wenn sich das Fahrzeug in dem spezifischen Bereich (RG) befindet und ein Gefälle auf einer Fahrroute (IR) des Fahrzeugs vorhanden ist, die Fahrsteuereinheit (117, 230) das Fahren des Fahrzeugs gemäß einem Gradienten des Gefälles steuert.

4. Steuervorrichtung (110, 200) des Fahrzeugs (100) nach Anspruch 1 oder 2, wobei, wenn die Bestimmungseinheit (116, 220) bestimmt, dass sich das Fahrzeug in dem spezifischen Bereich befindet, die Fahrsteuereinheit (117, 230) das Fahren des Fahrzeugs steuert, ohne Parameter zu verwenden, die in den Erfassungsdaten enthalten sind und mit einer Beschleunigung des Fahrzeugs und einer Gierrate des Fahrzeugs verknüpft sind.

5. Steuervorrichtung (110, 200) des Fahrzeugs (100) nach Anspruch 1 oder 2, wobei, wenn die Fahrsteuereinheit (117, 230) bestimmt, dass die Detektionsdaten durch eine Störung außerhalb des spezifischen Bereichs beeinflusst werden, die Fahrsteuereinheit bewirkt, dass eine Übertragungsvorrichtung (400) eine Übertragung durchführt.

## Revendications

1. Dispositif de commande (110, 200) comprenant :
une unité d'acquisition (113, 203) configurée pour acquérir des données de détection à partir d'un capteur (140, 150, 300), dans lequel le capteur détecte un état de fonctionnement d'un véhicule (100), dans lequel le véhicule est configuré pour être capable de fonctionner par conduite sans pilote ;
une unité de détermination (116, 220) configurée pour déterminer si oui ou non le véhicule est situé dans une zone spécifique (RG) dans laquelle les données de détection sont sujettes à une influence d'une perturbation ; et
une unité de commande de fonctionnement (117, 230) configurée pour commander le fonctionnement du véhicule à l'aide des données de détection, dans lequel lorsque l'unité de détermination détermine que le véhicule est situé dans la zone spécifique, l'unité de commande de fonctionnement abaisse un degré de contribution des données de détection à la commande de fonctionnement du véhicule comparativement à un cas où l'unité de détermination détermine que le véhicule est situé à l'extérieur de la zone spécifique,
**caractérisé en ce que** :
dans un cas où personne ne se trouve dans la zone spécifique, même lorsque l'unité de détermination détermine que le véhicule est situé dans la zone spécifique, l'unité de commande de fonctionnement n'abaisse pas le degré de contribution des données de détection à la commande de fonctionnement du véhicule comparativement au cas où l'unité de détermination détermine que le véhicule est situé à l'extérieur de la zone spécifique.

2. Dispositif de commande (110, 200) du véhicule (100) selon la revendication 1, dans lequel l'unité de détermination (116, 220) détermine si oui ou non le véhicule est situé dans la zone spécifique (RG) à l'aide d'informations d'emplacement du véhicule et d'une carte indiquant la zone spécifique.

3. Dispositif de commande (110, 200) du véhicule (100) selon la revendication 1 ou 2, dans lequel, lorsque le véhicule est situé dans la zone spécifique (RG) et une pente est présente sur un itinéraire de fonctionnement (IR) du véhicule, l'unité de commande de fonctionnement (117, 230) commande le fonctionnement du véhicule selon une déclivité de la pente.

4. Dispositif de commande (110, 200) du véhicule (100) selon la revendication 1 ou 2, dans lequel, lorsque l'unité de détermination (116, 220) détermine que le véhicule est situé dans la zone spécifique, l'unité de commande de fonctionnement (117, 230) commande le fonctionnement du véhicule sans utiliser des paramètres inclus dans les données de détection et associés à une accélération du véhicule et un taux de lacet du véhicule.

5. Dispositif de commande (110, 200) du véhicule (100) selon la revendication 1 ou 2, dans lequel, lorsque l'unité de commande de fonctionnement (117, 230) détermine que les données de détection sont influencées par une perturbation à l'extérieur de la zone spécifique, l'unité de commande de fonctionnement amène un dispositif de diffusion en continu (400) à réaliser une diffusion en continu.
